# EUROPEAN PATENT SPECIFICATION

(11) **EP 4 411 111 B1**
(45) Date of publication and mention of the grant of the patent: **29.01.2025**
(21) Application number: 23214796.7
(22) Date of filing: 07.12.2023
(51) Int. Cl.: F01D 5/32

(54) **ROTOR ASSEMBLY FOR A GAS TURBINE, GAS TURBINE AND METHOD FOR ASSEMBLING A ROTOR ASSEMBLY**
ROTORANORDNUNG FÜR EINE GASTURBINE, GASTURBINE UND VERFAHREN ZUR MONTAGE EINER ROTORANORDNUNG
AGENCEMENT DE ROTOR POUR UNE TURBINE À GAZ, TURBINE À GAZ ET PROCÉDÉ D'ASSEMBLAGE D'UN AGENCEMENT DE ROTOR

(30) Priority: 31.01.2023 KR 20230012527
(43) Date of publication of application: 07.08.2024
(73) Proprietor: Doosan Enerbility Co., Ltd., Seongsan-gu Changwon-si, Gyeongsangnam-do 51711 (KR)
(72) Inventor: LEE, Han Min, 47846 Busan (KR)
(74) Representative: BCKIP Part mbB

(56) References cited:
- EP-A1- 0 374 387
- EP-A1- 3 128 131
- JP-A- S59 192 801
- JP-A- S62 139 904
- KR-B1- 101 647 250
- US-A1- 2009 290 983
- US-A1- 2014 245 752

## Description

### TECHNICAL FIELD

The present invention relates to a rotor assembly for a gas turbine, to a gas turbine and to a method for assembling a rotor assembly. In particular, the present invention relates to a rotor assembly having blade fastening assembly, which is capable of fastening an axial position of a blade upon installation on a rotor disk and preventing axial movement of the blade after the installation, and a gas turbine including the same.

### BACKGROUND

A turbine is a mechanical device that obtains a rotational force by an impulsive force or reaction force using a flow of a compressible fluid such as steam or gas. A turbine may be realized, for example, as a steam turbine using steam or as a gas turbine using a high temperature combustion gas.

Among them, the gas turbine is mainly composed of a compressor, a combustor, and a turbine. The compressor is provided with an air inlet for introducing air, and a plurality of compressor vanes and compressor blades, which are alternately arranged in a compressor housing.

The combustor supplies fuel to the compressed air compressed in the compressor and ignites a fuel-air mixture using a burner to produce a high temperature and high pressure combustion gas.

The turbine has a plurality of turbine vanes and turbine blades disposed alternately in a turbine casing. Further, a rotor is arranged to pass through the center of the compressor, the combustor, the turbine and an exhaust chamber.

Both ends of the rotor are rotatably supported by bearings. A plurality of disks is fixed to the rotor and the respective blades are connected to the disks. A drive shaft may be connected to the rotor and to a generator, for example, at an end of the exhaust chamber.

Since these gas turbines have no reciprocating mechanism, such as a piston found in a 4-stroke engine, and consequently have no frictional parts like piston-cylinder, they have several advantages. These include minimal consumption of lubricating oil, a significant reduction in amplitude, which is a characteristic of a reciprocating machine, and the ability to operate at high speed.

Briefly describing the operation of the gas turbine, the compressed air compressed in the compressor is mixed with fuel and combusted to produce a high-temperature combustion gas in the combustor, which is then injected toward the turbine. The injected combustion gas passes through the turbine vanes and the turbine blades to generate a rotational force, which causes the rotor to rotate.

The foregoing is intended merely to aid in the understanding of the background of the present invention, and is not intended to mean that the present invention falls within the purview of the related art that is already known to those skilled in the art.

Document JP S59 192 801 A discloses a detachable moving blade fixing method comprising a step of embedding a key fittingly in advance in a recess provided at the top end part of a rotor disc, a step of inserting a moving blade in a disc groove, a step of screwing a screw in a threaded hole of the key, a step of pulling up the key by screwing the screw, and the key is fixed in order for engaging with both the recess at the disc side and the moving blade.

Document US 2 009 / 290 983 A1 discloses a turbine blade assembly. A turbine blade which is a stop blade is provided with a cutout portion which is formed in one circumferential side surface of a shank portion at the center in the axial direction of a turbine rotor, a cutout portion which is formed in one circumferential side surface of the shank portion from one end portion to the cutout portion in the axial direction of the turbine rotor, and a through passage which is formed to pass from the cutout portion to an effective blade part and in which a moving member, which moves a stopper member to the effective blade part in the cutout portion, is inserted.

Document EP 3 128 131 A1 discloses a fixture for buckets for a turbine. The fixture includes a rotor wheel that includes a plurality of dovetail grooves. A platform seat is formed between the dovetail grooves and provided with a first insertion groove in a circumferential direction. A bucket includes a root that inserts into one of the dovetail grooves. A base platform disposed on an upper surface of the root includes a second insertion groove at a position facing the first insertion groove. A first fixture is inserted into an internal area defined by the first and second insertion grooves. A second fixture is inserted into the internal area defined by the first groove and the second insertion groove of a final bucket to fix the final bucket among buckets mounted on the rotor wheel. An auxiliary fixture is inserted into an opening hole formed in the base platform of the final bucket and facing the second fixture.

Document KR 101 647 250 B 1 discloses an axial locking device of a bucket comprising a rotor rotationally installed on a casing, a plurality of dovetail grooves formed along an outer circumferential surface of the rotor to have a distance in a tangential direction of the rotor, a plurality of buckets provided with a wing part, a platform, and a dovetail, and to be fixated by inserting to the dovetail groove along an axial direction of the rotor. A fastening groove is formed by penetrating a portion of the platform, and a receiving part is formed on the rotor to correspond to a position of the fastening groove. Finally, a fastening block is inserted to the fastening groove and the receiving part.

Document JP S62 139 904 A discloses a securing device for turbine rotor vane. The securing device is for improving the strength against the force in the axial direction of a vane wheel by inserting a stopper into a space between an insertion groove at a portion for planting a rotor vane and a notched groove in the outer circumference of the vane wheel than inserting a pin along the underface of the stopper and securing the stopper. The stopper is inserted into a space formed between an insertion groove made in a planting section of the last rotor vane and a notched groove made in the planting section of vane wheel. A pin is inserted into a pin hole in the axial direction of the vane wheel, then fitted in a groove of the stopper and the stopper is fitted in the insertion groove.

Document US 2 014 / 245 752 A1 discloses a system and method for attaching a rotating blade in a turbine. A system for attaching a rotating blade in a turbine includes a bush having an axial slot and a radial slot that intersects with the axial slot. A radial retention member fits within the radial slot, and an axial retention member fits within the axial slot and engages with the radial retention member. A method for attaching a rotating blade in a turbine includes a step of inserting a bush into an axial passage in a rotor wheel and inserting a radial retention member into a radial passage in the rotor wheel and through at least a portion of the bush. The method further includes a step of inserting the rotating blade in a slot in the rotor wheel, a step of inserting the radial retention member into a retention slot in the rotating blade, and a step of inserting an axial retention member into the bush.

Document EP 0 374 387 A1 discloses a locking of side entry blades. In a turbine rotor axially extending grooves and airfoil blades supported in the grooved includes locking devices disposed in circumferential slots and keyways formed in the blade roots such that said locking devices extend to the adjacent blade root, whereby disengagement of said locking devices from the respective blade roots is prevented and at lest the locking device locking the last of said blades installed in the rotor consists of two parts with deformable portions, which overlap for installing the last blade and which are deformed so as to abut one another to prevent disengagement of said locking device.

### SUMMARY OF THE INVENTION

Accordingly, the present invention has been made keeping in mind the above problems occurring in the related art, and an objective of the present invention is to provide a solution which is capable of fastening an axial position of a blade upon installation on a rotor disk and preventing the axial movement of the blade after the installation, and a gas turbine including the same.

To this end, the present invention provides a rotor assembly in accordance with claim 1, a gas turbine in accordance with claim 13, and a method in accordance with claim 15.

According to a first aspect of the present invention, there is provided a rotor assembly. The rotor assembly includes a blade, a rotor disk including a disk slot into which a root member of the blade is inserted, and a blade fastening assembly. The blade fastening assembly comprises a fastening key having a through hole which may optionally include an internal thread; a first groove formed in the rotor disk with a shape corresponding to a portion of the fastening key, a second groove at least partially formed in a platform of the blade in communication with the first groove and forming a shape corresponding to a remaining portion of the fastening key in a state of being inserted into the disk slot, a pin groove connected with the first groove and formed in the rotor disk, and a fastening pin inserted into the through hole and the pin groove.

The first groove, generally, may extend along an axial direction, and the second groove may extend transverse to the first groove, in particular, along a circumferential direction.

The first groove may be formed in an outer circumference or an outer circumferential surface of the rotor disk. Similar, the disk slot may be formed in the outer circumference of the rotor disk and extend along axial direction.

The second groove may include a first portion formed in the rotor disk in communication with the first groove, and a second portion formed in the platform in communication with the first portion of the second groove and the first groove. The second portion is adjacent to the first portion when the root member of the blade is received in the disk slot. Since the first portion of the second groove is formed in the rotor disk, i.e., in the outer circumference thereof, the fastening key may be supported with respect to the axial direction on the surfaces of the first portion of the second groove and, thus, by the rotor disk.

The fastening key may include a body part in which the through hole is formed, and a wing part extending from the body part toward the platform.

The body part may have a first height and the wing part may have a second height smaller than the first height. The body part may have an upper surface and an opposite lower surface, and the first height may be measured from the upper to the lower surface. Similar, the wing part may have an upper surface and an opposite lower surface, and the second height may be measured from the upper to the lower surface of the wing part.

The wing part may extend toward the platform or, generally, protrude from a side surface of the body part. The side surface may extend between the upper surface and the lower surface of the body part. The lower surface of the wing part may be positioned spaced from the lower surface of the body part. Additionally, or alternatively, the upper surface of the body part and the upper surface of the wing part may extend flush with each other or form a continuous surface.

The wing part may be inserted into the second groove, e.g., through both the first portion of the second groove and the second portion of the second groove.

The fastening pin may be in a cylindrical shape.

The fastening pin may include a first insertion part having an end inserted into the pin groove and a second insertion part connected to the insertion part inserted into the through hole. The second insertion part may comprise an external thread on an outer circumferential surface thereof. The external thread may be engaged with an optional internal thread provided in the through hole.

The second insertion part may be provided on an end face thereof with a fastening structure, e.g., in the form of a polygonal recess. The fastening structure is generally configured for being coupled with a fastener to rotate the fastening pin.

In a second aspect of the present invention, there is provided a gas turbine including: a compressor configured to compress air; a combustor configured to mix the compressed air from the compressor with fuel and combust a compressed air-fuel mixture; a turbine section rotated by combustion gases from the combustor to generate power; and a rotor assembly of the first aspect of the invention. The rotor assembly may be formed in at least one of the compressor and the turbine section to fasten an axial position of a blade and prevent the axial movement of the blade. As described above, the blade fastening assembly of the rotor assembly may include: a fastening key having a threaded hole; a rotor disk including a disk slot into which a root member is inserted, the rotor disk having a first groove with a shape corresponding to a portion of the fastening key, a first portion of a second groove adjacent to the first groove, and a pin groove connected with the first groove; a platform having a second portion of the second groove formed in communication with the first portion of the second groove and the first groove and forming a shape corresponding to a remaining portion of the fastening key in a state of being inserted into the disk slot; and a fastening pin inserted into the threaded hole and the pin groove.

The fastening key may include a body part in which the threaded hole is formed, and a wing part extending from the body part toward the platform.

The body part may have a first height and the wing part may have a second height smaller than the first height.

The wing part may extend toward the platform from a side surface of the body part extending downwards the second height from an upper surface of the body part.

The wing part may be inserted through both the first portion of the second groove and the second portion of the second groove.

The fastening pin may be in a cylindrical shape.

The fastening pin may include an insertion part having an end inserted into the pin groove and a threaded part connected to the insertion part and threaded on an outer circumferential surface thereof.

The threaded part may be provided on an upper surface thereof with a fastening member into which a fastener is inserted to rotate the fastening pin.

According to a third aspect of the invention, a method for assembling the rotor assembly of the first aspect includes inserting the root member of the blade into the disk slot of the rotor disk, inserting the fastening key is inserted into the first groove and the second groove, and inserting the fastening pin into the through hole and the pin groove.

Optionally, the method may further include fastening the fastening pin in at least one of the through hole and the pin groove, for example, by engaging the optional external thread provided on the fastening pin with the optional internal thread provided in the through hole and/or the fastening groove, as described above.

Details of other implementations of various aspects of the present invention will be described in the following detailed description.

According to the present invention, the installation of the blade on the rotor disk can be structurally safe and easily performed. Furthermore, after the installation, the axial movement of the blade can be prevented. Accordingly, wear caused by friction between the blades and the rotor disk can be prevented, thereby improving the durability of a gas turbine.

### BRIEF DESCRIPTION OF THE DRAWINGS

FIG. 1 is a partially cut-away perspective view of a gas turbine according to an embodiment of the present invention;
FIG. 2 is a cross-sectional view illustrating a schematic structure of a gas turbine according to an embodiment of the present invention;
FIG. 3 is a partial cross-sectional view illustrating an internal structure of the gas turbine according to an embodiment of the present invention;
FIG. 4 is a perspective view illustrating rotor assembly according to an embodiment of the present invention with a turbine blade and a turbine rotor disk;
FIG. 5 is an enlarged perspective view illustrating the turbine blade being fastened to the turbine rotor disk;
FIG. 6 is a perspective view illustrating a fastening key and a fastening pin being engaged in a state of FIG. 5;
FIG. 7 is a perspective view illustrating the fastening key and the fastening pin of a blade fastening assembly of a rotor assembly according to an embodiment of the present invention; and
FIGS. 8 and 9 are views illustrating a process of installing a turbine blade on a turbine rotor disk using a blade fastening assembly according to an embodiment of the present invention.

### DETAILED DESCRIPTION OF EXEMPLARY EMBODIMENTS

Hereinafter, exemplary embodiments of the present invention will be described in detail with reference to the accompanying drawings. However, it should be noted that the present invention is not limited thereto, and may include all of modifications, equivalents or substitutions within the scope of the present invention as defined in the appended claims.

Terms used herein are used to merely describe specific embodiments, and are not intended to limit the present invention. As used herein, an element expressed as a singular form includes a plurality of elements, unless the context clearly indicates otherwise. Further, it will be understood that the term "comprising" or "including" specifies the presence of stated features, numbers, steps, operations, elements, parts, or combinations thereof, but does not preclude the presence or addition of one or more other features, numbers, steps, operations, elements, parts, or combinations thereof.

Hereinafter, preferred embodiments of the present invention will be described in detail with reference to the accompanying drawings. It is noted that like elements are denoted in the drawings by like reference symbols as whenever possible. Further, the detailed description of known functions and configurations that may obscure the gist of the present invention will be omitted. For the same reason, some of the elements in the drawings are exaggerated, omitted, or schematically illustrated.

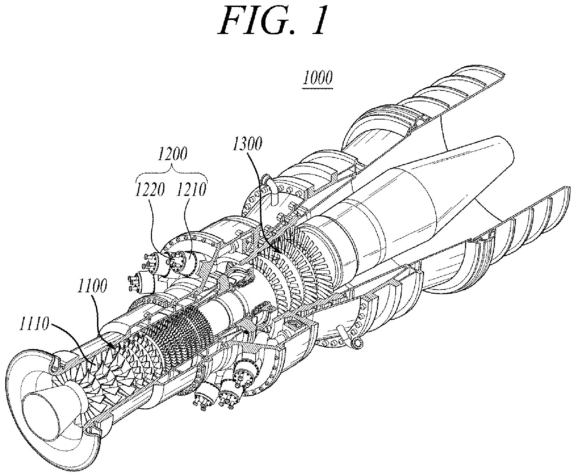

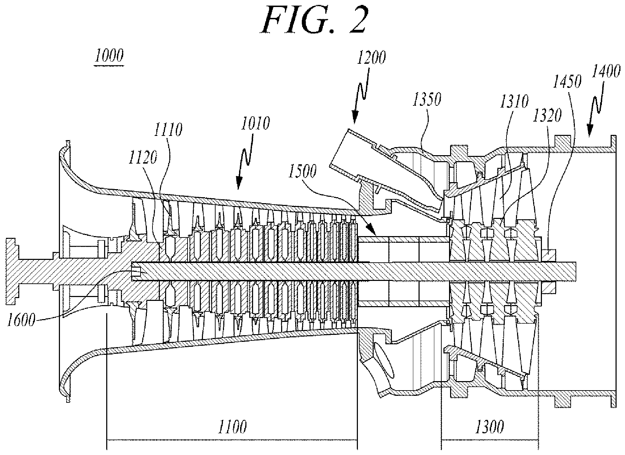

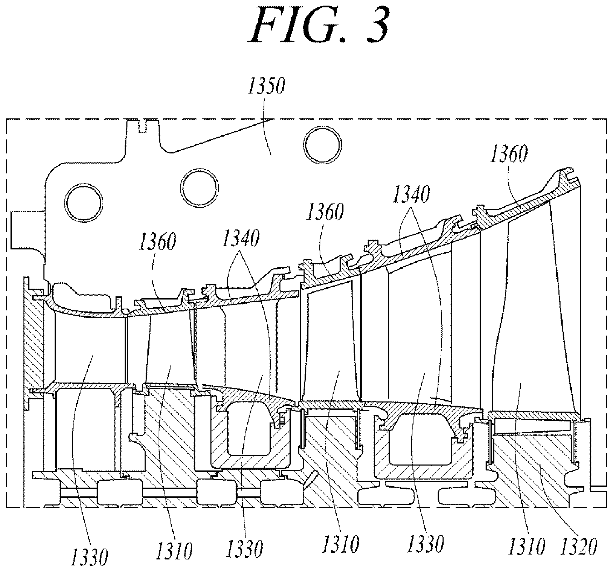

FIG. 1 is a partially cut-away perspective view of a gas turbine, FIG. 2 is a cross-sectional view illustrating a schematic structure of a gas turbine, and FIG. 3 is a partial cross-sectional view illustrating an internal structure of the gas turbine.

As illustrated in FIG. 1, a gas turbine 1000 includes a compressor 1100, a combustor 1200, and a turbine 1300. The compressor 1100 includes a plurality of blades 1110 radially installed. The compressor 1100 rotates the blade 1110 so that air flows while being compressed by the rotation of the blade 1110. The size and installation angle of the blade 1110 may vary depending on the installation location. In one embodiment, the compressor 1100 is connected directly or indirectly to the turbine 1300, and receives a portion of the power generated from the turbine 1300 to rotate the blade 1110.

Air compressed by the compressor 1100 flows to the combustor 1200. The combustor 1200 includes a plurality of combustion chambers 1210 and a fuel nozzle module 1220 arranged in an annular shape.

The gas turbine 1000 includes a housing 1010 and a diffuser 1400 which is disposed on a rear side of the housing 1010 and through which a combustion gas passing through a turbine is discharged. A combustor 1200 is disposed in front of the diffuser 1400 so as to receive and burn compressed air.

Referring to the flow direction of the air, a compressor 1100 is located on the upstream side of the housing 1010, and a turbine 1300 is located on the downstream side of the housing. A torque tube 1500 is disposed as a torque transmission member between the compressor 1100 and the turbine 1300 to transmit the rotational torque generated in the turbine to the compressor.

The compressor 1100 is provided with a plurality (for example, 14) of compressor rotor disks 1120, which are fastened by a tie rod 1600 to prevent axial separation thereof.

Specifically, the compressor rotor disks 1120 are axially arranged, wherein the tie rod 1600 constituting a rotary shaft passes through substantially a central portion of the compressor rotor disks 1120. Here, the neighboring compressor rotor disks 1120 are disposed so that opposed surfaces thereof are pressed against each other by being axially clamped between the torque tube 1500 and a counter member fastened to an end of the tie rod 1600 and the neighboring compressor rotor disks do not rotate relative to each other.

A plurality of blades 1110 are radially coupled to an outer circumferential surface of each compressor rotor disk 1120. Each of the blades 1110 is fastened to the respective compressor rotor disk 1120.

Vanes (not shown) fixed to the housing are respectively positioned between the compressor rotor disks 1120. Unlike the rotor disks, the vanes are fixed to the housing and do not rotate. The vane serves to align a flow of compressed air that has passed through the blades 1110 of the compressor rotor disk 1120 and guide the air to the blades 1110 of the rotor disk 1120 located on the downstream side.

As schematically shown in FIG. 2, the tie rod 1600 is arranged to pass through the center of the compressor rotor disks 1120 and turbine rotor disks 1320. To a first end of the tie rod 1600, a counterpart is fastened which presses against the compressor rotor disk located on the most upstream side, and to a second end of the tie rod 1600, a fixing nut 1450 is fastened which presses against a turbine rotor disk located on the most downstream side. Generally, the turbine rotor disks 1320 are axially clamped between the torque tube 1500 and the fixing nut 1450. The tie rod 1600 may be composed of a single tie rod or a plurality of tie rods.

The shape of the tie rod 1600 is not limited to that shown in FIG. 2, but may have a variety of structures depending on the gas turbine. That is, as exemplarily shown in FIG. 2, one single tie rod having a shape passing through a central portion of the rotor disk may be provided, or a plurality of tie rods may be arranged in a circumferential manner, or a combination thereof may be used.

Although not shown, the compressor of the gas turbine may be provided with a guide vane serving as a guide element at a position adjacent to the diffuser in order to adjust a flow angle of a pressurized fluid entering a combustor inlet to a designed flow angle. The guide vane may be referred to as a deswirler.

The combustor 1200 mixes the introduced compressed air with fuel and combusts the air-fuel mixture to produce a high-temperature and high-temperature and high-pressure combustion gas. With an isobaric combustion process in the compressor, the temperature of the combustion gas is increased to the heat resistance limit that the combustor and the turbine components can withstand.

The combustor 1200 may comprise a plurality of combustors, which is arranged in the housing formed in a cell shape, and includes a burner having a fuel injection nozzle and the like, a combustor liner forming a combustion chamber, and a transition piece as a connection between the combustor and the turbine, thereby constituting a combustion system of a gas turbine.

Specifically, the combustor liner provides a combustion space in which the fuel injected by the fuel nozzle is mixed with the compressed air of the compressor and the fuel-air mixture is combusted. Such a liner may include a flame canister providing a combustion space in which the fuel-air mixture is combusted, and a flow sleeve forming an annular space surrounding the flame canister. A fuel nozzle is coupled to the front end of the liner, and an igniter plug is coupled to the side wall of the liner.

On the other hand, a transition piece is connected to a rear end of the liner so as to transmit the combustion gas combusted by the igniter plug to the turbine side. An outer wall of the transition piece is cooled by the compressed air supplied from the compressor so as to prevent thermal breakage due to the high temperature combustion gas.

To this end, the transition piece is provided with cooling holes through which compressed air is injected into and cools the inside of the transition piece and flows towards the liner.

The air that has cooled the transition piece flows into the annular space of the liner and compressed air is supplied as a cooling air to the outer wall of the liner from the outside of the flow sleeve through cooling holes provided in the flow sleeve so that both air flows may collide with each other.

In the meantime, the high-temperature and high-pressure combustion gas from the combustor is supplied to the turbine 1300. The high-temperature and high-pressure combustion gas expands and collides with the rotating blades of the turbine, generating a reaction force that imparts a rotational torque. This torque is subsequently transferred to the compressor via the torque tube 1500. Any surplus power not needed to drive the compressor may be used to drive a generator or similar equipment.

The turbine 1300 is basically similar in structure to the compressor. That is, the turbine 1300 is also provided with a plurality of turbine rotor disks 1320 similar to the compressor rotor disks of the compressor. Thus, each turbine rotor disk 1320 also includes a plurality of turbine blades 1310 extending radially from the turbine rotor disk 1320. The respective turbine blade 1310 may be coupled to the turbine rotor disk 1320 in a dovetail coupling manner, for example. Between the axially spaced turbine blades 1310, a turbine vane 1330 fixed to a turbine casing 1350 is provided to guide a flow direction of the combustion gas passing through the turbine blades 1310.

The turbine vane 1330 is fixedly mounted within the turbine casing 1350 by a turbine vane platform 1340 coupled to radially inner and outer ends of the turbine vane 1330. On the other hand, in a position facing the radially outer end of the rotating turbine blade 1310 on the inner side of the turbine casing 1350, a ring segment 1360 is mounted to form a predetermined gap with the radially outer end of the turbine blade 1310.

The blade 1110, 1310 may be installed on the rotor disk 1120, 1320 by T-type pin fitting, wedge insertion, caulking, or the like. The T-type pin fitting and the wedge insertion are limited in shape when installation space is tight or the disk size is small, and the caulking has a problem of causing permanent damage to the disk. Therefore, provisions that are structurally safe and have ready-to-improve installation workability have been sought in installing the blade 1110, 1310 on the rotor disk 1120, 1320.

Further, the engagement of the blades 1110, 1310 with the rotor disk 1120, 1320 is somewhat loosely performed due to assembly and tolerance. Accordingly, as a result of frequent shutdowns of a gas turbine or vibrations generated during operation of a gas turbine, the blade 1110, 1310 may move in a direction parallel to the center tie rod 1600 (also referred to herein as an axial direction). This axial movement of the blade 1110, 1310 may cause wear due to friction between the blade 1110, 1310 and the rotor disk 1120, 1320. Therefore, there is a need for a provision to prevent the axial movement of the blade 1110, 1310.

In the following, a description will illustrate the case where a blade and a rotor disk refer to a turbine blade 1310 and a turbine rotor disk 1320, but the present invention may also be applied to the case where a blade and a rotor disk are a compressor blade 1110 and a compressor rotor disk 1120.

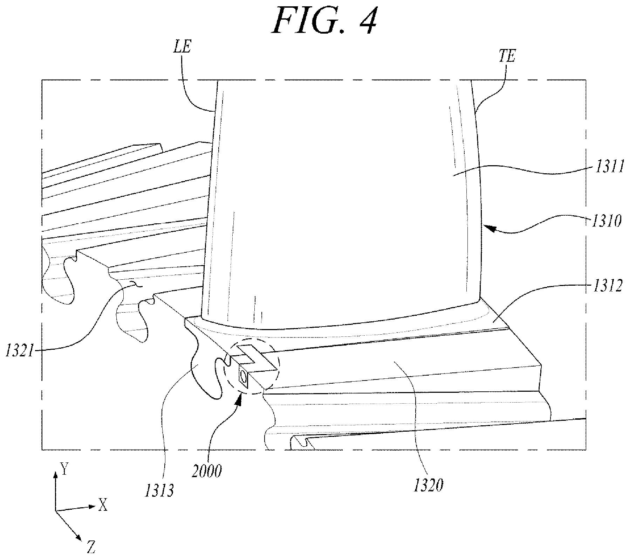

FIG. 4 is a perspective view illustrating a turbine blade and a turbine rotor disk of a rotor assembly.

Referring to FIG. 4, the turbine blade 1310 includes an airfoil 1311, a platform 1312, and a root member 1313.

The airfoil 1311 is formed on an upper or first surface of the platform 1312. Generally, the airfoil 1311 may protrude from the first surface of the platform 1312 along a radial direction Y. The airfoil 1311 may be formed to have an optimized aerodynamic shape depending on the specifications of a gas turbine. Generally, the airfoil 1311 includes a leading edge LE disposed on or defining an upstream side and a trailing edge TE disposed on or defining a downstream side based on a flow direction of combustion gases.

The platform 1312 is disposed at the lower end or platform end of the airfoil 1311. The platform 1312 may be formed in a substantially rectangular plate shape. Cooling flow paths may be formed inside the airfoil 1311 such that cooling air can flow therethrough via the platform 1312.

The root member 1313 is disposed on a radially inner side or second surface of the platform 1312. In other words, the root member 1313 and the platform 1312 extend on opposite sides of the platform 1312 with respect to the radial direction Y. The radially inner side of the platform 1312 may be a lower portion of the platform 1312. The root member 1313 may be formed to taper radially inwardly in width. A dovetail may be formed on both circumferential sides of the root member 1313. The dovetail may be fir-tree shaped in cross-section and may be formed in plurality.

The turbine rotor disk 1320 may be generally disk shaped, and includes a plurality of disk slots 1321 that are formed on an outer circumference of the turbine rotor disk 1320. The disk slots 1321 may be formed to have a fir-tree shaped cross-section. Generally, the disk slots 1321 and the root member 1313 of a respective turbine blade 1310 may be formed to have corresponding cross-sections. The disk slots 1321 may extend along an axial direction X. The turbine blades 1310 may be fastened and installed in the disk slots 1321, in particular, by introducing the root members 1313 in the disk slots 1321.

Referring to FIG. 4, the direction X is an axial direction, and the upstream side and the downstream side are defined based on the flow direction of the combustion gases along the axial direction X. The upstream end and the downstream end may be referred to as a forward end and a rearward end, respectively. The direction Y is a radial direction, along which the airfoil 1311 extends from the platform 1312. The direction Z is a circumferential direction, along which the outer circumference of the disk-shaped turbine rotor disk 1320 is defined.

When the turbine blade 1310 is installed in the disk slot 1321, a blade fastening assembly 2000 is utilized to secure the axial position of the blade and prevent the axial movement of the blade once installed. The blade fastening assembly 2000 includes a first groove 2001, a second groove 2002, a pin groove 2003, a fastening key 2100, and a fastening pin 2200.

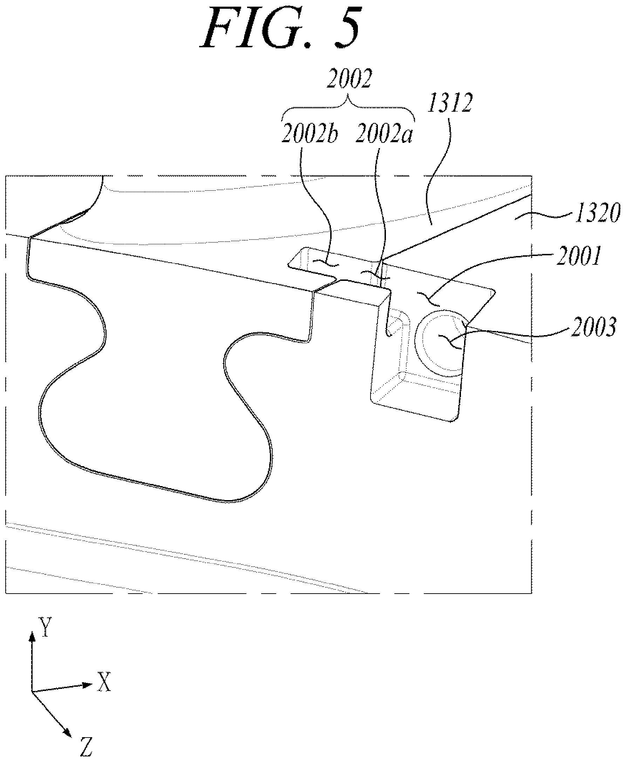

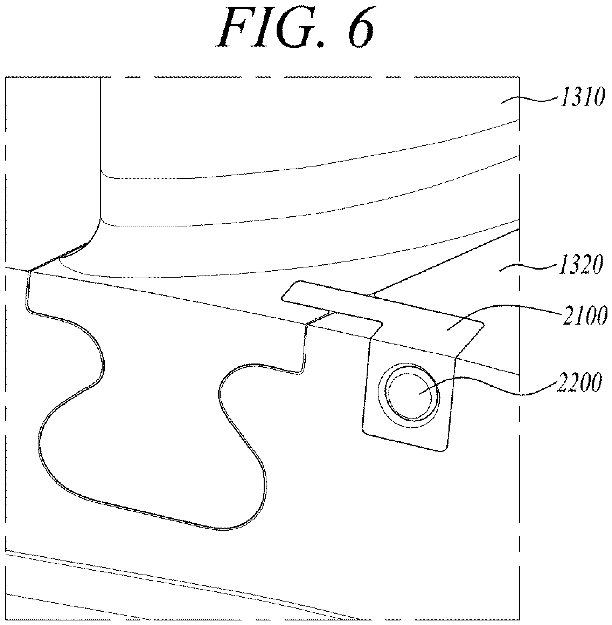

FIG. 5 is an enlarged perspective view illustrating the turbine blade being fastened to the turbine rotor disk, and FIG. 6 is a perspective view illustrating a fastening key 2100 and a fastening pin 2200 being engaged in a state of turbine blade of FIG. 5.

Referring to FIG. 5, the first groove 2001 and the pin groove 2003 are formed in an axially forward end of the turbine rotor disk 1320 or generally in an axial end of the turbine rotor disk 1320, and the second groove 2002 is formed at least partially in the platform 1312,specifically, in a lateral end portion of the platform 1312.

The first groove 2001, generally, is formed in the outer circumference of the turbine rotor disk 1320 and extends along the axial direction X. For example, the first groove 2001 may be formed by machining or cutting a portion of the axially forward end and the upper end of the turbine rotor disk 1320. The first groove 2001 may be substantially in a cuboidal shape.

The pin groove 2003 may be formed in an axial end surface of the first groove 2001, wherein the axial end surface limits the first groove 2001 in the axial direction X. For example, the pin groove 2003 may be formed by machining or cutting the end wall, i.e., the rearward end surface of the first groove 2001. The pin groove 2003 may be in a cylindrical hole shape, as exemplarily shown in Fig. 5. The pin groove 2003 may extend along the axial direction X, e.g., toward the rearward rear end from the rearward end surface of the first groove 2001.

The second groove 2002 may include a first portion, also referred to as first wing groove portion 2002a, and a second portion, also referred to as a second wing groove portion 2002b. The second groove 2002 may extend along the circumferential direction or, generally, in a direction transverse to the extension direction of the first groove 2001. As exemplarily shown in Fig. 5, the second groove 2002 extends from or is connected to the first groove 2001 and extends at least partially within the platform 1312. Optionally, the first wing groove portion 2002a may extend in the turbine rotor disk 1320, and the second wing groove portion 2002b may extend in the platform 1312. The second groove 2002 may be formed, for example, by machining or cutting a portion of the turbine rotor disk 1320 adjacent to the first groove 2001 (i.e., the first wing groove portion 2002a) and a side portion of the platform 1312 (i.e., the second wing groove portion 2002b). The first wing groove portion 2002a is extended from and in communication with the first groove 2001 and may be formed by machining or cutting a portion of the turbine rotor disk 1320 adjacent to the first groove 2001 toward the platform 1312. The first wing groove portion 2002a may be formed such that its rearward end surface is in a same axial position with the rearward end surface of the first groove 2001 and its forward end surface is located distanced from the forward end surface of the turbine rotor disk 1320 in the axial direction X. Further optional, the first wing groove portion 2002a may be formed to have a smaller depth than a depth of the first groove 2001 from the upper end surface of the turbine rotor disk 1320 in the radial direction Y. The second wing groove portion 2002b may formed at the platform 1312 such that the locations of its rearward end surface, its forward end surface and its lower end surface matches the ones of the rearward end surface, the forward end surface and the lower end surface of the first wing groove portion 2002a when the turbine blade 1310 is inserted into the disk slot 1321. Thereby, the second groove 2002, which is a combined groove of the first wing groove portion 2002a and the second wing groove portion 2002b, may be substantially in a cuboidal shape.

The first groove 2001 is formed in a shape matching and corresponding to a portion of the fastening key 2100 (i.e., body part 2110) described below, and the second groove 2002 is formed in a shape corresponding to the remainder of the fastening key 2100 (i.e., the wing part 2120). In other words, the first groove 2001 and the second groove 2002 are formed such that integral shape of them matches a shape of the fastening key 2100, and such that the fastening key 2100 may be matingly inserted into the combined and integral groove formed by the first groove 2001 and the second groove 2002. The first groove 2001 and the second groove 2002 are formed in communication with each other when the turbine blade 1310 is inserted into the disk slot 1321. The first groove 2001 and the second groove 2002 are connected to each other to form a shape corresponding to the shape of the fastening key 2100.

The pin groove 2003 is formed in connection with the first groove 2001. The pin groove 2003 is formed by extending axially rearwards from an inner surface (i.e., the rearward surface which is also referred to as axial and surface herein) of the first groove 2001. In the pin groove 2003, an end of the fastening pin 2200 described later is inserted.

Referring to FIG. 6, the fixing key 2100 is inserted into the first groove 2001 and the second groove 2002, and the fixing pin 2200 is inserted into the pin groove 2003 through a through hole 2111 formed in the fixing key 2100. This allows the axial position of the turbine blade to be fixed using the fixing key 2100 and the fixing pin 2200 when the turbine blade 1310 is matingly installed in the turbine disk slot 1321. Further, after installation, the fastening key 2100 and fastening pin 2200 can prevent axial movement of the turbine blade 1310 within the turbine disk slot 1321.

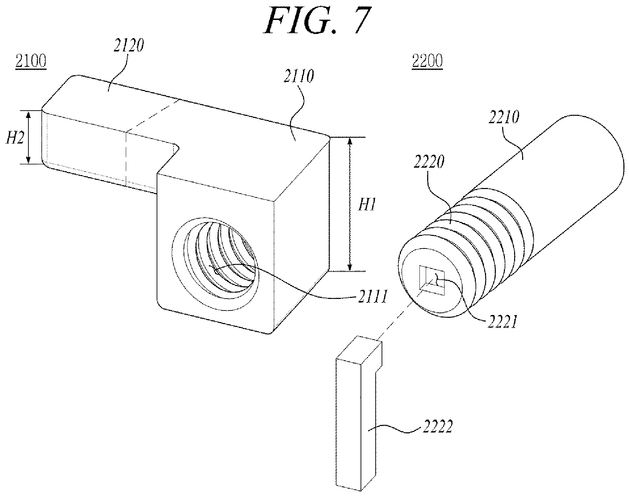

FIG. 7 is a perspective view illustrating the fastening key and the fastening pin constituting a blade fastening assembly according to an embodiment of the present invention.

Referring to FIG. 7, the fastening key 2100 includes a body part 2110 and a wing part 2120.

The body part 2110 may be formed in a predetermined shape, such as a cuboidal shape having a first height H1 in the radial direction Y when it is assembled with the turbine rotor disk 1320 and the turbine blade 1310. The body part 2110, generally, may have a shape corresponding to the shape of the first groove 2001 so that the body part 2110 can be matingly received in the first groove 2001.

A through hole 2111 is formed through the body part 2110 along the axial direction X. The through hole 2111 is formed to be in communication with the pin groove 2003 when the body part 2110 is assembly with the turbine rotor disk 1320. For example, the through hole 2111 may be positioned coaxially with pin groove 2003 when the body part 2110 is assembly with the turbine rotor disk 1320, i.e., when the body part 2110 is received in the first groove 2001. A thread, in particular, an internal thread may be formed on an inner wall of the through hole 2111 as exemplarily shown in Fig. 7. The body part 2110 may be inserted into the first groove 2001.

The wing part 2120 is formed to extend transverse to the body part 2110. The wing part 2120 may protrude from the wing part 2120 with a predetermined length. When being assembled with the turbine rotor disk 1320, the wing part 2120 extends toward the platform 1312 from the body part 2110 in the circumferential direction Z. The wing part 2120 is formed to have a second height H2 that is smaller than the first height H1 in the radial direction Y when it is assembled with the turbine rotor disk 1320 and the turbine blade 1310. The wing part 2120 is formed to extend toward the platform 1312 from a side surface of the body part in the circumferential direction Z. An upper surface of the wing part 2120 may be flush with an upper surface of the body part 2110. Hence, the second height H2 may be measured from the upper surface of the body part 2110. Since the second height H2 is smaller than the first height H1, a lower surface of the wing part 2120 may be positioned spaced from a lower surface of the body part 2110. A length of the wing part 2120 in the circumferential direction Z may be equal to the length of the second groove 2002 (i.e., the combined width of the first wing groove portion 2002a and the second wing groove portion 2002b). Generally, the length of the body part 2110 is at least such that the wing part 2120 may be inserted into the second groove 2002 so as to protrude into the portion of the second groove 2002 formed in the platform 1312.

Referring to FIG. 7, the fastening pin 2200 may be in the form of a cylinder extending a predetermined length, and the fastening pin 2200 may be inserted into and secured in the through hole 2111 and the pin groove 2003. The fastening pin 2200 may include a first insertion part 2210 and a second insertion part 2220.

The outer circumferential surface of the first insertion part 2210 may be formed in a smooth shape, allowing first insertion part 2210 of the pin 2200 to be inserted into the pin groove 2003. The outer circumferential surface of the second insertion part 2220 may be threaded to engage with the thread optionally provided in the through hole 2111 to allow the fastening pin 2200 to be securely fastened to the fastening key 2100. Alternatively, or additionally to the thread in the through hole 2111, it may also be provided that the pin groove 2003 is provided with an internal thread (not shown). In this case also the first insertion part 2210 may be provided with a thread to be engaged with the thread of the pin groove. Optionally, the thread in the through hole 2111 and the thread on the second insertion part 2220 may be omitted. Although not shown, a fastening structure 2221 may be formed on an forward end surface (externally exposed side) of the second insertion part 2220 such that a separate fastener 2222 may be inserted therethrough to rotate the fastening pin 2200. When the fastening pin 2200 is inserted, the fastener 2222 can be inserted into the fastening structure 2221 to rotate the fastening pin 2200, so that the fastening pin 2200 can be firmly fastened with the thread provided in the through hole 2111 and/or the pin groove 2003. The fastener 2222 and the fastening structure 2221 may also be used for disassembling the fastening pin 2200 from the through hole 2111 and the pin groove 2003.

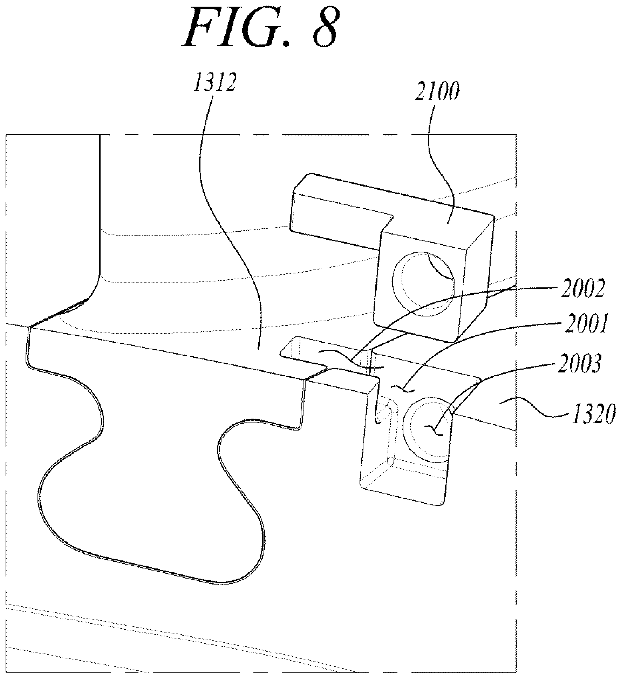

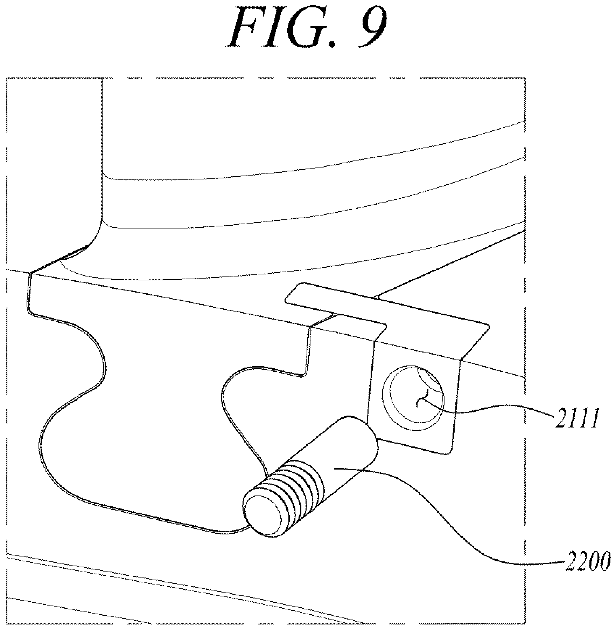

Next, a process of installing a turbine blade into a turbine disk slot will be described with reference to FIGS. 8 and 9. FIGS. 8 and 9 are views illustrating a process of installing a turbine blade on a turbine rotor disk using a blade fastening 2000 as described above. On the other hand, FIGS. 8 and 9 may be understood as illustrating a process of manufacturing and assembling a gas turbine.

First, as illustrated in FIG. 8, the first groove 2001 and the pin groove 2003 are formed in the turbine rotor disk 1320, and the second groove 2002 is formed adjacent to the first groove 2001 on the turbine rotor disk 1320 and on the platform 1312. Next, the fastening key 2100 is inserted into the first groove 2001 and the second groove 2002. At this time, the body part 2110 of the fastening key 2100 is inserted into the first groove 2001, and the wing part 2120 is inserted into the second groove 2002.

Next, as illustrated in FIG. 9, the fastening pin 2200 is inserted into the through hole 2111, and then rotated so that the fastening pin 2200 is firmly fastened with the thread formed in the through hole 2111 and/or in the pin groove 2003.

In this way, by inserting the fastening key 2100 into the first groove 2001 and the second groove 2002 and the fastening pin 2200 into the through hole 2111 and the pin groove 2003, the installation of the blade on the rotor disk is structurally safe and improves installation workability. Furthermore, preventing the axial movement of the blade after installation to minimize wear resulting from friction between the blade and the rotor disk can enhance the overall durability of a gas turbine.

The blade fastening assembly 2000 according to the present invention is particularly advantageous in cases where 1) the working space on both axial sides the rotor disk is narrow, and 2) the shape of the fastening pin or key is limited due to the small size of the blade and rotor disk.

While embodiments of the present invention have been described, it will be apparent to those skilled in the art that various modifications and variations can be made in the present invention through addition, change, omission, or substitution of components without departing from the scope of the invention as set forth in the appended claims, and such modifications and changes may also be included within the scope of the present invention. Also, it is noted that any one feature of an embodiment of the present invention described in the specification may be applied to another embodiment of the present invention. Similarly, the present invention encompasses any embodiment that combines features of one embodiment and features of another embodiment.

## Claims

1. A rotor assembly for a gas turbine, comprising:
a blade (1110, 1310) comprising a platform (1312) and a root member (1313);
a rotor disk (1120, 1320) including a disk slot (1321) into which the root member (1313) is inserted; and
a blade fastening assembly (2000), comprising:
a fastening key (2100) having a through hole (2111);
a first groove (2001) formed in the rotor disk (1120, 1320) with a shape corresponding to a portion of the fastening key (2100),
a second groove (2002) formed in communication with the first groove (2001) and at least partially extending in the platform (1312) of the blade (1110, 1310), the second groove (2002) having a shape corresponding to a remaining portion of the fastening key (2100) in a state in which the root member (1313) is inserted into the disk slot (1321), wherein the fastening key (2100) is positioned within the first groove (2002) and the second groove (2002),
a pin groove (2003) connected with the first groove (2001); and
a fastening pin (2200) inserted into the through hole (2111) and the pin groove (2003),
wherein the first groove (2001) and the pin groove (2003) are formed in an axial end of the rotor disk (1120, 1320), and the second groove (2002) is formed to extend in a side portion of the platform (1312).

2. The rotor assembly of claim 1, wherein the second groove (2002) comprises a first portion (2002a) formed in the rotor disk (1120, 1320) in communication with the first groove (2001), and a second portion (2002b) formed in the platform (1312) so as to be in communication with the first portion (2002a) of the second groove (2002) in a state in which the root member (1313) is inserted into the disk slot (1321).

3. The rotor assembly of claim 1 or 2, wherein the fastening key (2100) comprises:
a body part (2110) in which the through hole (2110) is formed and which is positioned in the first groove (2001), and
a wing part (2120) extending from the body part (2120) toward the platform (1312) and being positioned in the second groove (2002).

4. The rotor assembly of claim 3, wherein the body part (2110) has a first height (H1) measured between opposite upper and lower surfaces of the body part (2110), and the wing part (2120) has a second height (H2) measured between opposite upper and lower surfaces of the wing part (2120), the second height (H2) being smaller than the first height (H1).

5. The rotor assembly of claim 4, wherein the wing part (2120) protrudes from a side surface of the body part (2110) which extends between the upper and lower surfaces of the body part (2110), wherein the lower surface of the wing part (2120) is positioned spaced from the lower surface of the body part (2110).

6. The rotor assembly of claim 5, wherein the upper surface of the body part (2110) and the upper surface of the wing part (2120) extend flush with each other.

7. The rotor assembly of any one of claims 3 to 5 insofar as being dependent to claim 2, wherein the wing part (2120) is inserted through both the first portion (2002a) of the second groove (2002) and the second portion (2002b) of the second groove (2002).

8. The rotor assembly of any one of the preceding claims,
wherein the fastening pin (2200) is in a cylindrical shape, and
wherein the fastening pin (2200) comprises:
a first insertion part (2210) having an end inserted into the pin groove (2003), and
a second insertion part (2220) connected to the first insertion part (2210) and being positioned in the through hole (2111) of the fastening key (2100).

9. The rotor assembly of claim 8, wherein:
the through hole (2111) of the fastening key (2100) comprises an internal thread, and the second insertion part (2220) of the fastening pin (2200) comprises an external thread which is engaged with the internal thread of the through hole (2111); and/or
the pin groove (2003) comprises an internal thread, and the first insertion part (2210) of the fastening pin (2200) comprises an external thread which is engaged with the internal thread of the pin groove (2003).

10. The rotor assembly of claim 8 or 9, wherein the second insertion part (2220) comprises a fastening structure (2221) formed on an axial end face thereof, the fastening structure (2221) being configured to receive or couple with a fastener (2222) to rotate the fastening pin (2200).

11. The rotor assembly of any one of the preceding claims, wherein the pin groove (2003) extends along an axial direction (X) from an inner surface that limits the first groove (2001) with respect to the axial direction (X).

12. The rotor assembly of any one of the preceding claims, wherein the second groove (2002) is formed to extend in the side portion of the platform (1312) and also in a portion of the rotor disk (1120, 1320) adjacent to the first groove (2001).

13. A gas turbine (1000) comprising:
a compressor (1100) configured to compress air;
a combustor (1200) configured to mix the compressed air from the compressor (1010) with fuel and combust a compressed air-fuel mixture;
a turbine section (1300) configured to be rotated by combustion gases from the combustor (1200) to generate power; and
at least one rotor assembly according to any one of the preceding claims forming part of the compressor (1100), and/or at least one rotor assembly according to any one of the preceding claims forming part of the turbine section (1300).

14. The gas turbine (1000) of claim 13, wherein the root member (1313) and the platform (1312) are formed on a turbine blade (1310) when the rotor assembly forms part of the turbine section (1300), and wherein the root member (1313) and the platform (1312) are formed on a compressor blade (1110) when the rotor assembly forms part of the compressor (1100).

15. Method for assembling the rotor assembly of any one of claims 1 to 13, the method comprising:
inserting the root member (1313) of the blade into the disk slot (1321) of the rotor disk (1120, 1320);
inserting the fastening key (2100) into the first groove (2001) and the second groove (2002); and
inserting the fastening pin (2200) into the through hole (2111) and the pin groove (2003).

## Patentansprüche

1. Rotoranordnung für eine Gasturbine, umfassend:
ein Blatt (1110, 1310), das eine Plattform (1312) und ein Fußelement (1313) umfasst;
eine Rotorscheibe (1120, 1320), die einen Scheibenschlitz (1321) beinhaltet, in den das Fußelement (1313) eingeführt ist; und
eine Blattbefestigungsanordnung (2000), umfassend:
einen Befestigungskeil (2100) mit einem Durchgangsloch (2111);
eine erste Nut (2001), die in der Rotorscheibe (1120, 1230) mit einer Form ausgebildet ist, die einem Abschnitt des Befestigungskeils (2100) entspricht,
eine zweite Nut (2002), die in Kommunikation mit der ersten Nut (2001) ausgebildet ist und sich zumindest teilweise in der Plattform (1312) des Blatts (1110, 1310) erstreckt, wobei die zweite Nut (2002) eine Form aufweist, die einem verbleibenden Abschnitt des Befestigungskeils (2100) in einem Zustand entspricht, in dem das Fußelement (1313) in den Scheibenschlitz (1321) eingeführt ist, wobei der Befestigungskeil (2100) innerhalb der ersten Nut (2001) und der zweiten Nut (2002) positioniert ist,
eine Stiftnut (2003), die mit der ersten Nut (2001) verbunden ist; und
einen Befestigungsstift (2200), der in das Durchgangsloch (2111) und die Stiftnut (2003) eingeführt ist,
wobei die erste Nut (2001) und die Stiftnut (2003) in einem axialen Ende der Rotorscheibe (1120, 1320) ausgebildet sind und die zweite Nut (2002) so ausgebildet ist, dass sie sich in einem Seitenabschnitt der Plattform (1312) erstreckt.

2. Rotoranordnung nach Anspruch 1, wobei die zweite Nut (2002) einen ersten Abschnitt (2002a), der in der Rotorscheibe (1120, 1320) in Kommunikation mit der ersten Nut (2001) ausgebildet ist, und einen zweiten Abschnitt (2002b), der in der Plattform (1312) so ausgebildet ist, dass er mit dem ersten Abschnitt (2002a) der zweiten Nut (2002) in einem Zustand in Kommunikation steht, in dem das Fußelement (1313) in den Scheibenschlitz (1321) eingeführt ist, umfasst.

3. Rotoranordnung nach Anspruch 1 oder 2, wobei der Befestigungskeil (2100) umfasst:
ein Körperteil (2110), in dem das Durchgangsloch (2110) ausgebildet ist und das in der ersten Nut (2001) positioniert ist, und
ein Flügelteil (2120), das sich von dem Körperteil (2120) in Richtung der Plattform (1312) erstreckt und in der zweiten Nut (2002) positioniert ist.

4. Rotoranordnung nach Anspruch 3, wobei das Körperteil (2110) eine erste Höhe (H1) aufweist, die zwischen gegenüberliegenden oberen und unteren Oberflächen des Körperteils (2110) gemessen wird, und das Flügelteil (2120) eine zweite Höhe (H2) aufweist, die zwischen gegenüberliegenden oberen und unteren Oberflächen des Flügelteils (2120) gemessen wird, wobei die zweite Höhe (H2) kleiner als die erste Höhe (H1) ist.

5. Rotoranordnung nach Anspruch 4, wobei das Flügelteil (2120) von einer Seitenoberfläche des Körperteils (2110) vorsteht, der sich zwischen der oberen und der unteren Oberfläche des Körperteils (2110) erstreckt, wobei die untere Oberfläche des Flügelteils (2120) von der unteren Oberfläche des Körperteils (2110) beabstandet positioniert ist.

6. Rotoranordnung nach Anspruch 5, wobei sich die obere Oberfläche des Körperteils (2110) und die obere Oberfläche des Flügelteils (2120) bündig miteinander erstrecken.

7. Rotoranordnung nach einem der Ansprüche 3 bis 5, soweit sie von Anspruch 2 abhängig ist, wobei das Flügelteil (2120) sowohl durch den ersten Abschnitt (2002a) der zweiten Nut (2002) als auch durch den zweiten Abschnitt (2002b) der zweiten Nut (2002) eingeführt ist.

8. Rotoranordnung nach einem der vorangehenden Ansprüche,
wobei der Befestigungsstift (2200) eine zylindrische Form aufweist, und
wobei der Befestigungsstift (2200) umfasst:
ein erstes Einführteil (2210) mit einem Ende, das in die Stiftnut (2003) eingeführt ist, und
ein zweites Einführteil (2220), das mit dem ersten Einführteil (2210) verbunden ist und in dem Durchgangsloch (2111) des Befestigungskeils (2100) positioniert ist.

9. Rotoranordnung nach Anspruch 8, wobei:
das Durchgangsloch (2111) des Befestigungskeils (2100) ein Innengewinde umfasst und das zweite Einführteil (2220) des Befestigungsstifts (2200) ein Außengewinde umfasst, das mit dem Innengewinde des Durchgangslochs (2111) in Eingriff steht; und/oder
die Stiftnut (2003) ein Innengewinde umfasst und das erste Einführteil (2210) des Befestigungsstifts (2200) ein Außengewinde umfasst, das mit dem Innengewinde der Stiftnut (2003) in Eingriff steht.

10. Rotoranordnung nach Anspruch 8 oder 9, wobei das zweite Einführteil (2220) eine Befestigungsstruktur (2221) umfasst, die an ihrer axialen Endfläche ausgebildet ist, wobei die Befestigungsstruktur (2221) so konfiguriert ist, dass sie ein Befestigungselement (2222) aufnimmt oder mit diesem gekoppelt wird, um den Befestigungsstift (2200) zu drehen.

11. Rotoranordnung nach einem der vorangehenden Ansprüche, wobei sich die Stiftnut (2003) entlang einer axialen Richtung (X) von einer inneren Oberfläche erstreckt, die die erste Nut (2001) in Bezug auf die axiale Richtung (X) begrenzt.

12. Rotoranordnung nach einem der vorangehenden Ansprüche, wobei die zweite Nut (2002) so ausgebildet ist, dass sie sich in dem Seitenabschnitt der Plattform (1312) und auch in einem Abschnitt der Rotorscheibe (1120, 1320) benachbart zu der ersten Nut (2001) erstreckt.

13. Gasturbine (1000), umfassend:
einen Kompressor (1100), der so konfiguriert ist, dass er Luft komprimiert;
eine Brennkammer (1200), die so konfiguriert ist, dass sie die komprimierte Luft aus dem Kompressor (1010) mit Kraftstoff vermischt und ein komprimiertes Luft-Kraftstoff-Gemisch verbrennt;
einen Turbinenabschnitt (1300), der so konfiguriert ist, dass er durch Verbrennungsgase aus der Brennkammer (1200) gedreht wird, um Energie zu erzeugen; und
zumindest eine Rotoranordnung nach einem der vorangehenden Ansprüche, die einen Teil des Kompressors (1100) bildet, und/oder zumindest eine Rotoranordnung nach einem der vorangehenden Ansprüche, die einen Teil des Turbinenabschnitts (1300) bildet.

14. Gasturbine (1000) nach Anspruch 13, wobei das Fußelement (1313) und die Plattform (1312) auf einem Turbinenblatt (1310) ausgebildet sind, wenn die Rotoranordnung einen Teil des Turbinenabschnitts (1300) bildet, und wobei das Fußelement (1313) und die Plattform (1312) auf einem Kompressorblatt (1110) ausgebildet sind, wenn die Rotoranordnung einen Teil des Kompressors (1100) bildet.

15. Verfahren zum Zusammenbau der Rotoranordnung nach einem der Ansprüche 1 bis 13, wobei das Verfahren umfasst:
Einführen des Fußelements (1313) des Blatts in den Scheibenschlitz (1321) der Rotorscheibe (1120, 1320);
Einführen des Befestigungskeils (2100) in die erste Nut (2001) und die zweite Nut (2002);
Einführen des Befestigungsstifts (2200) in das Durchgangsloch (2111) und die Stiftnut (2003).

## Revendications

1. Ensemble de rotor pour une turbine à gaz, comprenant :
une aube (1110, 1310) comprenant une plate-forme (1312) et un élément d'emplanture (1313) ;
un disque de rotor (1120, 1320) comprenant une fente de disque (1321) où est inséré l'élément d'emplanture (1313) ; et
un ensemble de fixation d'aubes (2000), comprenant :
une clavette de fixation (2100) ayant un trou traversant (2111) ;
une première rainure (2001) formée dans le disque de rotor (1120, 1320) et dont la forme correspond à une partie de la clavette de fixation (2100),
une deuxième rainure (2002) formée en communication avec la première rainure (2001) et s'étendant au moins partiellement dans la plate-forme (1312) de l'aube (1110, 1310), ladite deuxième rainure (2002) ayant une forme correspondant à une partie restante de la clavette de fixation (2100) dans un état où l'élément d'emplanture (1313) est inséré dans la fente de disque (1321), la clavette de fixation (2100) étant mise en place dans la première rainure (2002) et la deuxième rainure (2002),
une rainure à goupille (2003) reliée à la première rainure (2001) ; et
une goupille de fixation (2200) insérée dans le trou traversant (2111) et la rainure à goupille (2003), la première rainure (2001) et la rainure à goupille (2003) étant formées dans une extrémité axiale du disque de rotor (1120, 1320), et la deuxième rainure (2002) étant formée de manière à s'étendre dans une partie latérale de la plate-forme (1312).

2. Ensemble de rotor selon la revendication 1, où la deuxième rainure (2002) comprend une première partie (2002a) formée dans le disque de rotor (1120, 1320) en communication avec la première rainure (2001), et une deuxième partie (2002b) formée dans la plate-forme (1312) de manière à être en communication avec la première partie (2002a) de la deuxième rainure (2002) dans un état où l'élément d'emplanture (1313) est inséré dans la fente de disque (1321).

3. Ensemble de rotor selon la revendication 1 ou la revendication 2, où la clavette de fixation (2100) comprend :
une partie de corps (2110) où est formé le trou traversant (2110) et qui est mise en place dans la première rainure (2001), et
une partie d'aile (2120) s'étendant de la partie de corps (2120) vers la plate-forme (1312) et mise en place dans la deuxième rainure (2002).

4. Ensemble de rotor selon la revendication 3, où la partie de corps (2110) a une première hauteur (H1) mesurée entre la surface supérieure et la surface inférieure opposées de la partie de corps (2110), et où la partie d'aile (2120) a une deuxième hauteur (H2) mesurée entre la surface supérieure et la surface inférieure opposées de la partie d'aile (2120), la deuxième hauteur (H2) étant inférieure à la première hauteur (H1).

5. Ensemble de rotor selon la revendication 4, où la partie d'aile (2120) fait saillie d'une surface latérale de la partie de corps (2110) s'étendant entre la surface supérieure et la surface inférieure de la partie de corps (2110), la surface inférieure de la partie d'aile (2120) étant espacée de la surface inférieure de la partie de corps (2110).

6. Ensemble de rotor selon la revendication 5, où la surface supérieure de la partie de corps (2110) et la surface supérieure de la partie d'aile (2120) s'étendent de niveau l'une avec l'autre.

7. Ensemble de rotor selon l'une des revendications 3 à 5, si dépendante de la revendication 2, où la partie d'aile (2120) est insérée dans la première partie (2002a) de la deuxième rainure (2002) ainsi que dans la deuxième partie (2002b) de la deuxième rainure (2002).

8. Ensemble de rotor selon l'une des revendications précédentes, où la goupille de fixation (2200) est de forme cylindrique, et où ladite goupille de fixation (2200) comprend :
une première pièce d'insertion (2210) ayant une extrémité insérée dans la rainure à goupille (2003), et
une deuxième partie d'insertion (2220) raccordée à la première partie d'insertion (2210) et mise en place dans le trou traversant (2111) de la clavette de fixation (2100).

9. Ensemble de rotor selon la revendication 8, où :
le trou traversant (2111) de la clavette de fixation (2100) présente un filet intérieur, et la deuxième partie d'insertion (2220) de la goupille de fixation (2200) présente un filet extérieur en prise avec le filet intérieur du trou traversant (2111) ; et/ou
la rainure à goupille (2003) présente un filet intérieur, et la première partie d'insertion (2210) de la goupille de fixation (2200) présente un filet extérieur en prise avec le filet intérieur de la rainure à goupille (2003).

10. Ensemble de rotor selon la revendication 8 ou la revendication 9, où la deuxième partie d'insertion (2220) comprend une structure de fixation (2221) formée sur une face d'extrémité axiale de celle-ci, ladite structure de fixation (2221) étant prévue pour recevoir une attache (2222) ou s'accoupler avec celle-ci pour faire tourner la goupille de fixation (2200).

11. Ensemble de rotor selon l'une des revendications précédentes, où la rainure à goupille (2003) s'étend dans la direction axiale (X) depuis une surface intérieure délimitant la première rainure (2001) par rapport à la direction axiale (X).

12. Ensemble de rotor selon l'une des revendications précédentes, où la deuxième rainure (2002) est formée de manière à s'étendre dans la partie latérale de la plate-forme (1312) et également dans une partie du disque de rotor (1120, 1320) adjacente à la première rainure (2001).

13. Turbine à gaz (1000), comprenant :
un compresseur (1100) prévu pour comprimer de l'air ;
une chambre de combustion (1200) prévue pour mélanger l'air comprimé refoulé par le compresseur (1100) avec un combustible et brûler le mélange air comprimé-combustible ;
une section de turbine (1300) prévue pour être mise en rotation par les gaz de combustion provenant de la chambre de combustion (1200) afin de produire de l'énergie ; et
au moins un ensemble de rotor selon l'une des revendications précédentes faisant partie du compresseur (1100), et/ou au moins un ensemble de rotor selon l'une des revendications précédentes faisant partie de la section de turbine (1300).

14. Turbine à gaz (1000) selon la revendication 13, où l'élément d'emplanture (1313) et la plate-forme (1312) sont formés sur une aube de turbine (1310) si l'ensemble de rotor fait partie de la section de turbine (1300), et où l'élément d'emplanture (1313) et la plate-forme (1312) sont formés sur une aube de compresseur (1110) si l'ensemble de rotor fait partie du compresseur (1100).

15. Procédé d'assemblage de l'ensemble de rotor selon l'une des revendications 1 à 13, comprenant :
l'insertion de l'élément d'emplanture (1313) de l'aube dans la fente (1321) du disque de rotor (1120, 1320) ;
l'insertion de la clavette de fixation (2100) dans la première rainure (2001) et la deuxième rainure (2002) ; et
l'insertion de la goupille de fixation (2200) dans le trou traversant (2111) et la rainure à goupille (2003).
